(19) Europäisches Patentamt
European Patent Office
Office européen des brevets

(11) **EP 4 465 253 A1**

(12) **EUROPEAN PATENT APPLICATION**

(43) Date of publication:
**20.11.2024 Bulletin 2024/47**

(21) Application number: **24175091.8**

(22) Date of filing: **10.05.2024**

(51) International Patent Classification (IPC):
**G06V 20/52** (2022.01)  **G06V 40/20** (2022.01)

(52) Cooperative Patent Classification (CPC):
**G06V 40/28; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023 IN 202321034111**

(71) Applicant: **Tata Consultancy Services Limited Maharashtra (IN)**

(72) Inventors:
• **DAS, APURBA**
  **560066 Bangalore - Karnataka (IN)**
• **JAIN, APEKSHA**
  **560066 Bangalore - Karnataka (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR MICRO-ACTIVITY IDENTIFICATION**

(57) This disclosure relates generally to a micro-activity identification associated with a task. Industrial operations involving complex processes are difficult to monitor due to multifaceted number of micro-activities within it. Surveillance of such complex processes is important as in the real environments there is no control over the working style of workers executing the task and the sequence of assembly process. To effectively monitor the task comprising plurality of micro-activity, the artificial intelligence (AI) based model is presented, which effectively monitors the micro-activity within and generates the quality score for the task under surveillance. The quality score is derived by assigning individual scores to the micro-activity performed correctly and by assigning penalty upon wrong performance of the micro-activity.

FIG. 2

EP 4 465 253 A1

**Description**

CROSS-REFERENCE TO RELATED APPLICATIONS AND PRIORITY

The present application claims priority from Indian patent application no. 202321034111, filed on May 15, 2023.

TECHNICAL FIELD

The disclosure herein generally relates to micro-activity identification, and, more particularly, to a computer implemented method and a system of surveilling a task for identification and quality scoring of micro-activities associated with the task.

BACKGROUND

In real-world environments, some activities/tasks are very complex, such as industrial operations, automotive assembly line, medical procedures involving surgery. Sometimes, these complex processes involve experienced professional's intervention for its execution. Achieving quality in the process depends on the performance of a human performing it. Although automation is seen as a promising option to maintain quality in the process, it is not possible in some cases to have fully automated systems. This may be due to infrastructural issues, or sometimes, there are stages in the production line or assembly line or some procedures where human intervention is necessary to guarantee certain quality standards. Even when the task is performed by the robots, the robotic actions can be analyzed based on close monitoring of their actions. Further, improvements can be brought in the robotic assemblies through learning from human action or from other robots. Despite of implementing lean manufacturing concept and standard operating procedures (SOPs), sometimes worker/operator intentionally or unintentionally tend to overlook the SOPs that results in inferior execution of work and ultimately deteriorates the quality of work. This is the normal tendency of humans to make mistakes in complex industrial environments. To guarantee the quality, the operator/worker should perform a set of actions as per SOPs, e.g. in the production line, the products must be assembled without any defects. Following the established process of handling a task not only guarantees the assured quality but also provides check and balances to ensure the safety in the work environment. The safety of the worker executing the task as well as the process safety ensures reduction and minimization of hazards that may arise due to over-looking established SOPs.

Solutions implemented in the state-of-the-art (SOTA) suggests an intelligent way to visualize information related to human action for assembly and quality in the production line, allowing the control of defect information in a way oriented to the worker/ operator performing certain activity. Other solutions have implemented acoustic quality control systems in their production lines with satisfactory results, and also implementing machine learning systems to identify any deviation from SOP. However, monitoring or surveillance of events happening in real environments where there is no control over the working style of workers and the sequence of assembly process remain unaddressed. Such events happening in the real world involve lot many micro-activities which are to be performed through human intervention. Micro-activity may be defined as a set of activities that occur while performing a task. The micro-activity may last for a short period of time (fraction of seconds to few seconds); e.g. while performing the task of assembling an engine of car, various micro-activities are involved, such as. picking up the right screw, holding the screw in a right manner, tightening the screw in a proper way. Such micro-activities involve gesture, posture, and movement of body parts. Video surveillance is an effective mechanism for supervising or inspecting an activity or the micro-activity. While surveilling an activity through a video capture mechanism requires capture of all those multiple micro-activities which are of high importance from the monitoring point-of-view. However, it remains resource intensive to process captured video to automatically detect multiple micro-activities associated with a task or an event. A significant amount of computational power is required to handle the huge volume of output generated by complex computer processing. In addition, each deployment site usually has only limited space and resources to handle all micro-activity associated video streams. Existing approaches hardly provide solutions that focus only on the micro-activity associated with a task.

SUMMARY

Embodiments of the present disclosure present technological improvements as solutions to one or more of the above-mentioned technical problems recognized by the inventors in conventional systems. For example, in one embodiment, a method of micro-activity identification is provided. The method includes, receiving, a video stream through a plurality of synchronized video cum audio camera device. The plurality of synchronized video cum audio camera device provides coverage of the task under surveillance from various angles. The method further includes decoding the video stream by an ingestion device, wherein the ingestion device decodes the video stream into a plurality of frames and extracts the associated audio from the video stream. The video stream of the person performing the task under surveillance is provided to an ingestion device to extract the batch of frames from the video stream. The frame extraction leads to extraction of both spatial information as well as temporal information. The batch of frames is used for video inferencing. The number of frames in a batch is configurable and can be adjusted according to the types of micro-activity to be monitored. The method further includes detecting at least one micro-activity in the plurality of frames by a pre-trained AI model. The pre-trained AI model comprises an object-hand-association (OHA) module, a video classification module, an audio analysis (AA) module, a hand gesture (HG) module, a pose estimation (PE) module, an optical character recognition (OCR) module, a dimension measurement (DM) module, an occupied hand (OH) module. The ODA module is based on Deep learning (DL) methods that involve neural networks, and the most important feature of DL is that it automatically extracts the features that should be focused on for analysis during the learning process. The output of each module is mapped to the exact time duration of the micro-activity performed. The method further includes verifying the micro-activity detected by the pre-trained AI model, wherein verification involves matching the micro-activity detected with a ground truth sequence previously fed to the AI model. The conditional check is performed during verification. E.g. if the predicted outcome of video classification module match with the ground truth list, no penalty is levied, and further activity will be checked for the right tool usage and right tool handling. However, if the predicted outcome of video classification module does not match with the ground truth list, the penalty is levied, and certain pre-defined score is deducted. The method further includes assigning a weightage to the each of the micro-activity detected by the plurality of modules and scoring the task by adding a positive score to each micro-activity performed correctly and assigning a penalty to the micro-activity performed incorrectly. The weightage assigned to each micro-activity is based on a right tool usage and a right tool handling while performing the micro-activity The method further includes obtaining a quality score for the task based on individual score assigned to the plurality of micro-activities detected.

In another aspect, a system for micro-activity identification is provided. The system includes at least one memory storing programmed instructions; one or more Input /Output (I/O) interfaces; and one or more hardware processors, an AI model comprising plurality of modules viz. an object-hand-association (OHA) module, a video classification module, an audio analysis (AA) module, a hand gesture (HG) module, a pose estimation (PE) module, an optical character recognition (OCR) module, a dimension measurement (DM) module, an occupied hand (OH) module operatively coupled to a corresponding at least one memory, wherein the system is configured to receive a video stream through a plurality of synchronized video cum audio camera device. The plurality of synchronized video cum audio camera device provides coverage of the task under surveillance from various angles. Further the system is configured to decode the video stream by an ingestion device, wherein the ingestion device decodes the video stream into a plurality of frames and extracts the associated audio from the video stream. The video stream of the person performing the task under surveillance is provided to an ingestion device to extract the batch of frames from the video stream. The frame extraction leads to extraction of both spatial information as well as temporal information. The batch of frames is used for video inferencing. The number of frames in a batch is configurable and can be adjusted according to the types of micro-activity to be monitored. Further, the system is configured to detect at least one micro-activity in the plurality of frames by a pre-trained AI model. The pre-trained AI model comprises an object-hand-association (OHA) module, video classification module, an audio analysis (AA) module, a hand gesture (HG) module, a pose estimation (PE) module, an optical character recognition (OCR) module, a dimension measurement (DM) module, an occupied hand (OH) module. The ODA module is based on Deep learning (DL) methods that involve neural networks, and the most important feature of DL is that it automatically extracts the features that should be focused on for analysis during the learning process. The output of each module is mapped to the exact time duration of the micro-activity performed. Further, the system is configured to verify the micro-activity detected by the pre-trained AI model, wherein verification involves matching the micro-activity detected with a ground truth sequence previously fed to the AI model. The conditional check is performed during verification. E.g. if the predicted outcome of video classification module match with the ground truth list, no penalty is levied, and further activity will be checked for the right tool usage and right tool handling. However, if the predicted outcome of video classification module does not match with the ground truth list, the penalty is levied, and certain pre-defined score is deducted. Further, the system is configured to assign a weightage to the each of the micro-activity detected by the plurality of modules and scoring the task by adding a positive score to each micro-activity performed correctly and assigning a penalty to the micro-activity performed incorrectly. The weightage assigned to each micro-activity is based on a right tool usage and a right tool handling while performing the micro-activity. Further, the system is configured to obtain a quality score for the task based on individual score assigned to the plurality of micro-activities detected.

In yet another aspect, a computer program product including a non-transitory computer-readable medium having embodied therein a computer program micro-activity identification is provided. The computer readable program, when executed on a computing device, causes the computing device to receive, via one or more hardware processors, a video stream through a plurality of synchronized video cum audio camera device. The plurality of synchronized video cum audio camera device provides coverage of the task under surveillance from various angles. Further, the computer readable program, when executed on a computing device, causes the computing device to decode, via the one or more hardware processors, the video stream by an ingestion device, wherein the ingestion device decodes the video stream into a plurality of frames and extracts the associated audio from the video stream. The video stream of the person performing the task under surveillance is provided to an ingestion device to extract the batch of frames from the video stream. The frame extraction leads to extraction of both spatial information as well as temporal information. The batch of frames is used for video inferencing. The number of frames in a batch is configurable and can be adjusted according to the types of micro-activity to be monitored. Further, the computer readable program, when executed on a computing device, causes the computing device to detect, via the one or more hardware processors, at least one micro-activity in the plurality of frames by a pre-trained AI model. The pre-trained AI model comprises an object-hand-association (OHA) module, a video classification module, an audio analysis (AA) module, a hand gesture (HG) module, a pose estimation (PE) module, an optical character recognition (OCR) module, a dimension measurement (DM) module, an occupied hand (OH) module. The ODA module is based on Deep learning (DL) methods that involve neural networks, and the most important feature of DL is that it automatically extracts the features that should be focused on for analysis during the learning process. The output of each module is mapped to the exact time duration of the micro-activity performed. The computer readable program, when executed on a computing device, causes the computing device to verify, via the one or more hardware processors, the micro-activity detected by the pre-trained AI model, wherein verification involves matching the micro-activity detected with a ground truth sequence previously fed to the AI model. The conditional check is performed during verification. E.g. if the predicted outcome of video classification module match with the ground truth list, no penalty is levied, and further activity will be checked for the right tool usage and right tool handling. However, if the predicted outcome of video classification module does not match with the ground truth list, the penalty is levied, and certain pre-defined score is deducted. The computer readable program, when executed on a computing device, causes the computing device to assign, via the one or more hardware processors, a weightage to the each of the micro-activity detected by the plurality of modules and scoring the task by adding a positive score to each micro-activity performed correctly and assigning a penalty to the micro-activity performed incorrectly. The weightage assigned to each micro-activity is based on a right tool usage and a right tool handling while performing the micro-activity. The computer readable program, when executed on a computing device, causes the computing device to obtain, via the one or more hardware processors, a quality score for the task based on individual score assigned to the plurality of micro-activities detected.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for micro-activity identification, according to some embodiments of the present disclosure.
FIG. 2 is an exemplary illustration of architectural overview of a system for recording, identification, and scoring of micro-activities in a surveillance video in accordance with some embodiments of the present disclosure.
FIG. 3 is a flow diagram of an illustrative method for recording, identification and scoring of micro-activities involved in a task under surveillance, in accordance with some embodiments of the present disclosure.
FIG. 4 illustrates steps of activity identification from a video classification module (M2), in accordance with some embodiments of the present disclosure.
FIG. 5 illustrates generalized scheme for scoring the plurality of micro activities associated within a task under surveillance, in accordance with some embodiments of the present disclosure.
FIG. 6 illustrates implementation of the system for recording, identification, and scoring of micro-activities in a surveillance video pertaining to execution of an appropriate packaging operation at the packaging industry setup in accordance with some embodiments of the present disclosure.
FIG. 7 is a scorecard generated by the system for an exemplary scenario of micro-activity identification in packaging operation, in accordance with some embodiments of the present disclosure.
FIG. 8 illustrates implementation of the system for recording, identification, and scoring of micro-activities in a surveillance video pertaining to execution of a laptop assembly operation at industry setup in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.
There are many different techniques in the literature for human action recognition. Video based action recognition is an emerging and challenging area of research in this era particularly for identifying and recognizing actions in a video sequence from a surveillance stream. The action recognition in the video has many applications, such as content-based video retrieval, surveillance systems for security and privacy purposes, human-computer-interaction, and activity recognition. The aim of action recognition is to detect and identify people, their behavior, suspicious activities in the videos, and deliver appropriate information to support interactive programs and IoT based applications. Action recognition still poses many challenges when it comes to ensuring the security and the safety of the residents, including industrial monitoring, violence detection, person identification, virtual reality, and cloud environments due to significant improvements in camera movements, occlusions, complex background, and variations in illumination. The spatial and temporal information play a crucial role in recognizing different human actions in videos. In the last decade, most of the methods used handcrafted features engineering to signify the spatial attributes of dynamic motion for characterizing the corresponding action in the videos. The handcrafted based features method in action recognition is mostly database-oriented and cannot satisfy the universal situation due to the motion style and the complex background clutter.

Artificial Intelligence (AI), specifically Deep Learning (DL) is now a widely used technique for high-level discriminative salient features learning and making end-to-end systems in video-based action and behavior recognition. The existing DL approaches for human action recognition (HAR) utilize simple convolutional neural networks (CNNs) strategies in convolution operation to learn the features from video frames by using per-trained models. These convolutional layers extract and learn spatial features to train a model for classification. Comparatively, the traditional CNN models have lower performance than handcrafted features in sequential data. Standard CNN models, such as AlexNet, VGG, and ResNet learn spatial features from a single input image. These models are useful in capturing the spatial information, but they are not very effective for temporal data, which is an important factor to capture motion information for the HAR in a video sequence. Recently, the spatiotemporal issues are handled by employing the recurrent neural networks (RNNs), where the LSTM is designed specifically for long-term video sequence to learn and process the temporal features for HAR in surveillance systems. Currently, most of the researchers developed a two-stream approach for action recognition to combine the temporal and spatial features for joint features training to cover the current challenges and limitations of the HAR.

Based on these facts, the precise recognition of action in real-world videos is still challenging, lacking information about the motion, style, and background clutter for the proper identification of human actions. The traditional method fails to address these issues due to challenges in handling continuous actions, difficulty in modeling crowded scenes due to occlusion, and sensitivity to noise. Similarly, the recent methods for the HAR resolve the sequence learning problem by the RNNs, LSTM, and gated recurrent unit. However, the above approaches do not focus on detection of micro-activities associated with an activity/ task. The detection of micro-activities is very important for surveilling a human performing the task and further scoring function is important that can quantify quality of the micro-activity being performed by the human. Surveillance is important in all such activities which need to be monitored or kept under observation.

In the foregoing description, terms "AI", "Machine Learning (ML)" and "DL" are used interchangeably and refer to a program or algorithm that relies on training data to recognize patterns and make predictions or decisions.

In the foregoing description, terms "micro-activity identification" and "micro-activity recognition" are used interchangeably, and both refer to a program or algorithm that relies on training data to recognize patterns and make predictions or decisions.

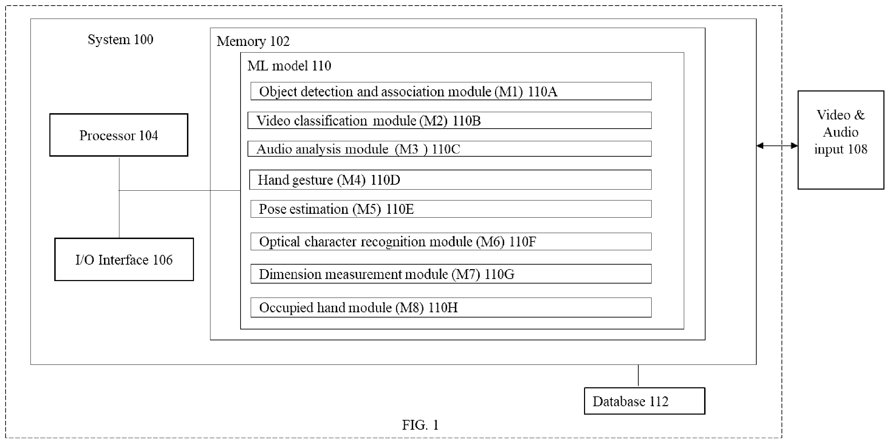

Referring now to the drawings, and more particularly to FIGS. 1 through 8, where similar reference characters denote corresponding features consistently throughout the figures, there are shown preferred embodiments and these embodiments are described in the context of the following exemplary system and/or method.

FIG. 1 illustrates an exemplary block diagram of a system for micro-activity identification, according to some embodiments of the present disclosure.

As illustrated in FIG. 1, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 102 may include a database or repository. The memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. In an embodiment, the memory 102 includes a plurality of modules, collectively responsible for micro-activity identification. The Plurality of modules forms an artificial intelligence (AI) based pre-trained machine learning model 110. The plurality of modules comprises an object-hand-association (OHA) module M1 represented as 110A, video classification module M2 represented as 110B, an audio analysis (AA) module M3 represented as 110C, a hand gesture (HG) module M4 represented as 110D, a pose estimation (PE) module M5 represented as 110E, an optical character recognition (OCR) module M6 represented as 110F, a dimension measurement (DM) module 7 represented as 110G, an occupied hand (OH) module M8 represented as 110H. The ODA module 110A is based on Deep learning (DL) methods that involve neural networks, and the most important feature of DL is that it automatically extracts the features that should be focused on for analysis during the learning process. DL techniques that are utilized in object detection are categorized in two-stage network (RCNN and SPPNet, Mask R-CNN, Fast RCNN, Faster RCNN, Pyramid Networks/FPN and G-RCNN) or a single-stage network (YOLO, SSD, RetinaNet, YOLOv3, YOLOv4, YOLOR). Convolutional neural networks (CNNs) and You only look once (YOLO) are the most commonly applied DL models for Object detection. The object detection module is trained by annotating every frame for object annotation by bounding box marking. The video classification 110B module attempts to detect changes in activity class to the standing still activity. These modules require training from start to end covering the entire activity so that model can learn sequence of micro-activity to be performed. The activity recognition is performed independently of the position or orientation so that it is trained irrespective of the surrounding environment. The video classification module utilizes multimodal sensor data from video and audio to classify a range of micro-activities being involved in performing a task. The video classification module is trained on multiple trimmed videos for each activity class. Spatiotemporal features are extracted using convolution neural network to get both space and time information for the activity. The video classification module recognizes the activities and their duration. video classification module classifies the activity in different classes. Among the various classes identified by the video classification module, at least two activities with highest probability classes are selected. The selected activity is further confirmed with other modules configured according to the present invention to support the prediction made by the video classification module. The AA module 110C involves a process of transforming, exploring, and interpreting audio signals recorded by digital devices. Aiming at understanding sound data, it applies a range of technologies, including state-of-the-art deep learning algorithms. Audio analysis typically includes obtaining project-specific audio data stored in standard file formats; and preparing data for your machine learning project, using software tools. It further includes extracting audio features from visual representations of sound data and selection of machine learning model to train it on audio features. The audio analysis for sound event detection is done through FFT performed on the extracted audio from the video file. Next the bandpass filter with lower and higher cut off frequency tuned to that of the sound event and is used to extract amplitude/ energy of the signal. Wherever the spectrum strength/ energy is significantly high (w.r.t configured threshold), the sound event is detected. The lower and higher cut-off frequencies are obtained from ensemble of audio clips carrying the target signal. The video stream involving a micro-activity with which a sound event is associated is detected at video classification module and trimmed into small clips for audio detection. These trimmed small clips are used for audio detection. Audio is extracted from the video and short-term-FFT (STFT) is calculated for amplitude comparison. The HG module 110D is integrated in the ML/DL model for recognizing commonly staged hand movements while performing an activity or a task. HG module is trained with the help of a dataset comprising images of wide variety of hand gestures commonly used in work environment. Machine Learning algorithm capable of classifying images of different hand gestures, such as a fist, palm, different target hand gestures are training like "pinching", "thumbs up", "pointing index finger", "punch". Commonly, hand gesture model is built with ConvNets (convolutional neural networks) architecture to classify the static images. The HG recognition model is used to detect the right tool handling and also to confirm the activities detected by video classification model. Landmark points are detected for both right and left hands. These detected hand points are further classified using machine learning model to detect specific hand gestures like pointing finger, right position of thumb etc. The pose estimation module 110E utilizes pose estimation method that involves computer vision techniques to detect human figures in images and video, so that one could determine, for example, where someone's elbow shows up in an image. There is no personal identifiable information associated with pose detection except the estimation of key body joints. Bosy posture estimation uses a deep learning algorithm for human pose detection. PoseNet model is embedded to train pose estimation module. Posenet is a real-time pose detection technique with which you can detect human beings' poses in Image or Video. It works in both cases as single-mode(single human pose detection) and multi-pose detection(Multiple humans pose detection). In simple words, Posenet is a deep learning TensorFlow model that allows you to estimate human pose by detecting body parts such as elbows, hips, wrists, knees, ankles, and form a skeleton structure of your pose by joining these points. The OCR module 110F is meant for text recognition. An OCR program extracts and repurposes data from scanned documents, camera images and image-only pdfs. OCR software singles out letters on the image, puts them into words and then puts the words into sentences, thus enabling access to and editing of the original content. It also eliminates the need for manual data entry. CNNs are one of the best techniques to use for deep learning OCR for the step of text detection. Convolution layers are commonly used for image classification tasks due to their efficiency in feature extraction. They allow detecting the meaningful edges in an image and (on a higher level) shapes and complex objects. In activity recognition, OCR is important as different parts of machines might have identical look whereas based on their position and number, the behavior of activity changes. The DM module 110G utilizes image sensor for edge detection. In dimension inspection using image sensor, position, width, angle can be measured by capturing the object in two dimensions and detecting the edge. The dimension measurement module is an ArUco™ markers which are binary square fiducial markers that can be used for camera pose estimation. The corner points of the marker used for distance measurement by pose estimation and are the intersection of the edges obtained by line fitting. The OHA module 110H maps the hand movements and detects the right posture of the hand holding tools for performing an assembly operation or any other task under surveillance. The memory 102 further comprises database 112 for storing data associated with the micro-activity under surveillance. The memory 102 further includes a plurality of modules (not shown here) comprises programs or coded instructions that supplement applications or functions performed by the system 100 for executing different steps involved in the process of micro-activity identification. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 104, or by a combination thereof. The plurality of modules can include various sub-modules (not shown).

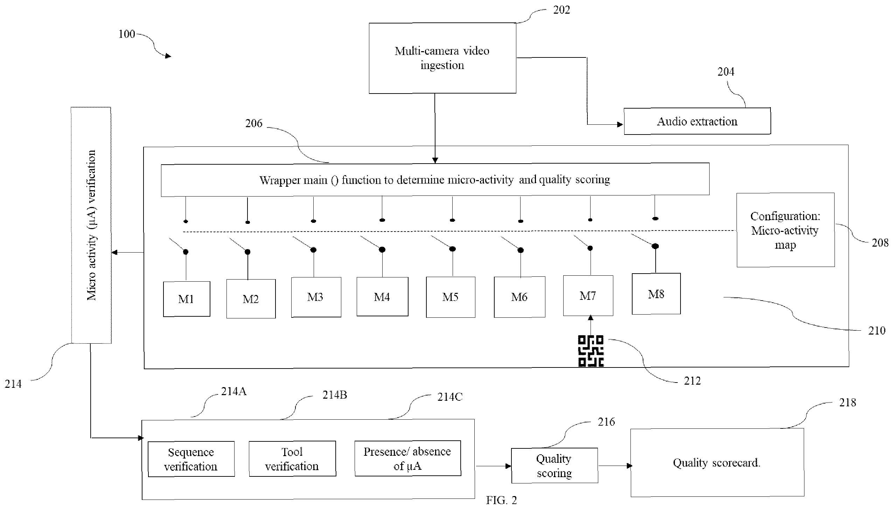

FIG. 2 is an exemplary illustration of architectural overview of a system for recording, identification, and scoring of micro-activities in a surveillance video in accordance with some embodiments of the present disclosure.

FIG. 2 is an exemplary illustration of architectural overview of the system 100 for recording, identification, and quality scoring of micro-activities in a surveillance video in accordance with some embodiments of the present disclosure. As is illustrate, multi-camera video ingestion 202 receives live video stream from video cum audio capture device. The ingestion device acts as an interface to receive and decode said video stream to obtain plurality of frames decoded from the video stream. The decoded frames are further calibrated to obtain calibrated frames. Part of video that includes audio is taken to audio extraction unit 204 wherein audio is extracted, processed, and stored. The stored audio is used as input to audio analysis module of pre-trained AI model 110 according to the present invention. The AI model 110 for micro-activity recognition wherein said model 210 comprises of a series of modules represented as M1, M2..... to M8 performing discrete tasks captured in said frame. In an embodiment of the present disclosure, the calibrated frames are processed in the AI model 110 via modules 110A to 110H wherein each module identifies specific activity associated with the micro-activity under surveillance. The system 100 includes a wrapper main () function 206 to determine micro-activity and quality scoring. The wrapper main () function 206 acts by detecting micro-activity identified as a result of actioning of one or more sub-modules (M1, M2............. M8) upon receiving an input from video cum audio capture device and instructions from micro-activity configuration map tool 208. According to an embodiment of the present invention, the wrapper function performs feature selection by selecting the most significant and relevant micro-activity from a vast set of a given dataset. The system 100 includes a micro-activity configuration map tool 208 that offers customization at the user end. The micro-activity configuration map tool 208 comprises of all the pre-defined features, actions, and parameters to be utilized by the modules (110A-110H) for training the AI model 110. According to an embodiment of the present invention, the AI model 110 is directed by the micro-activity configuration map tool 208 that coordinates between sub-modules detecting the micro-activity. User can define its own set of actions which are specific for training the modules to train for making specific prediction. The video classification module classifies the micro-activity into N classes, where N is the number of micro-activities required to be recognized. The micro-activity configuration map 208 converges the sub-tasks captured by the plurality of modules 210 (M1, M2.... M8) and along with wrapper function 206,processes the output of the AI model 210. micro-activity. A binary square fiducial marker 212 (known as ArUco™ marker) is the DM module 110G. The DM module 110G first measures the coordinates of the object captured in an image frame by performing ArUco™ marking 212 on the image frame to calculate the pixel to inch conversion ratio. Therefore, The DM module 110G calculates the object size based on object coordinates and pixel to inch conversion. The system 100 includes a micro-activity verification tool 214. The micro-activity verification tool 214 receives an output of the AI model 110 and set of pre-defined instructions from micro-activity configuration map 208 and confirms the prediction made by the AI model 110. The output of each module is mapped to the exact time duration of the micro-activity performed.

The micro-activity verification tool 214 is configured to perform critical features like sequence verification 214A, tool verification 214B and presence/absence of micro-activity 214C. Based on detection of these critical features, verification tool 214 assigns a weightage to each micro-activity. The weightage assigned to each micro-activity is based on a right tool usage and a right tool handling while performing the micro-activity. The weightages assigned for sequence verification 214A, tool verification 214B and presence/absence of micro-activity 214C are fed to the quality scoring module 216. The cumulative quality score is generated by a quality scoring module 216 for an activity detected through pre-trained AI model 110 and subsequently confirmed/verified by a verification tool 214. The quality score thus generated is captured in a scorecard 218 and is stored in a computer readable format. The scorecard 218 effectively captures complete details of an operator (e.g., a human performing a task/activity), activity class, details of multiple micro-activities involved within an activity. The scorecard 218 generated as a result of AI activity training provides a real time feedback with prompt and appraisal. Nevertheless, the right tool usage also ensures safety of an operator performing the micro-activity.

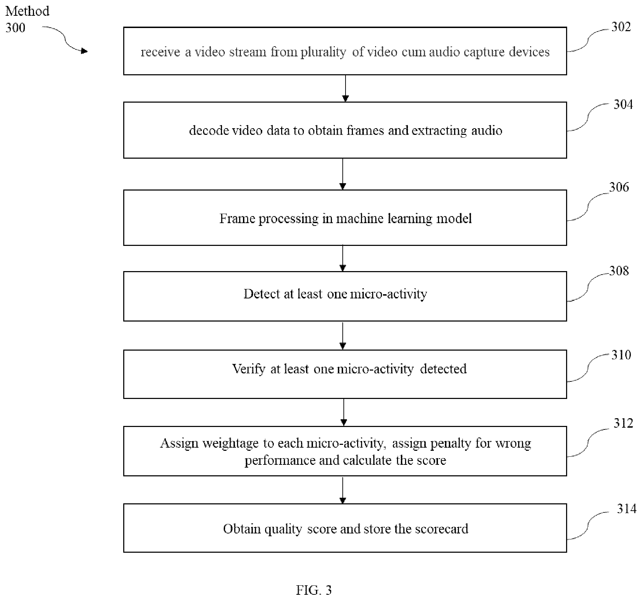

FIG. 3 is a flow diagram of an illustrative method for recording, identification and scoring of micro-activities involved in a task under surveillance, in accordance with some embodiments of the present disclosure.

The steps of the method 300 of the present disclosure will now be explained with reference to the components or blocks of the system 100 as depicted in FIG. 1 through FIG. 8. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, the one or more hardware processors 104 are configured to receive a live video stream through plurality of synchronized video cum audio capture device capable of acquiring respective image views together covering a field of view focusing the micro-activity associated with a task performed by a human. The received video signals comprise of an image stream of pixel data to be processed. The video cum audio capture device can be a video camera, monocular intensity cameras, stereo cameras, structured light cameras, Fairchild CCD camera, time-of-flight (TOF) cameras or any other camera, sensor or system that is capable of capturing grayscale or color intensity images or depth images, such as capable of precise generation of video image signals at video rates. A camera/web camera does not typically have hardware to analyze the video that it captures. Through the offloading of the analytical processing of the video to a processing unit, the video comprising plurality of micro-activities can be analyzed. In some embodiments, this analysis is done in real- time, or near real-time. Additionally, the attached processing units allow for the automatic provisioning and elastic scaling of the infrastructure needed to ingest and process streaming video data . Additionally, video streams from the same entity can be analyzed together (for example, tracking a person from camera-to-camera in a store.

At step 304 of the method 300, the one or more hardware processors 104 are configured to decode the video stream received from the video cum audio capture device to obtain plurality of frames. The extracted frames are further calibrated by removing distortions; and simultaneously an audio from the video stream is extracted and processed to identify a sound event associated with the task. Audio extraction is performed for those frames that involve audio. The extracted audio is processed separately at an audio analysis module 204 of the system 100. The video received from the video cum audio capture device is decoded to obtain frames. The ingestion device is provided that acts as an interface to receive and decode said video stream to obtain plurality of frames decoded from the video stream. The video captured from plurality of video capture device is synchronized prior to decoding the video stream into frames. The synchronized video is decoded, and frames are extracted using multi-threading and subsequently, stored in a buffer for frame processing. The input frame rate can be from about 20 FPS (frames per second) to about 60 FPS. In an example implementation, the input frame rate is about 30 FPS. The size of the frames decoded from the live video stream is selected from 240p (pixels), 360p, 480p, 720p, 1080p, 1440p and 2160p the size group comprising of about 240p rate is about 30 FPS. The decoded frames are taken for image calibration by applying at least one fiducial marker to remove distortions. A fiducial marker is used to correct the image distortion while decoding the frame. A fiducial marker is an object placed in the field of view of an imaging system which appears in the image produced, for use as a point of reference or a measure. It may be either something placed into or on the imaging subject, or a mark or set of marks in the reticle of an optical instrument. The distortion is caused due to camera angle and needs to be corrected once by applying the fiducial marker. In an embodiment of the present disclosure, the fiducial marker is a binary square fiducial marker. The binary square fiducial markers provide correspondences (its four corners) to obtain the camera pose. Also, the inner binary codification allows the possibility of applying error detection and correction techniques. The binary square fiducial marker is an ArUco™ marker, a synthetic square marker composed by a wide black border and an inner binary matrix which determines its identifier (id). The black border facilitates its fast detection in the image and the binary codification allows its identification and the application of error detection and correction techniques. The marker size determines the size of the internal matrix. The ArUco™ is calculated for the initial frames. The coordinates of the object are determined first and then identification of ArUco™ markers are done on the image to calculate the pixel to inch conversion ratio. The object size is calculated based on object coordinates and pixel to inch conversion from ArUco™.

At step 306 of the method 300, the one or more hardware processors 104 are configured to process the frame extracted from a video stream in a pre-trained AI model 110 for micro-activity identification wherein the model comprises of a series of modules (M1, M2....M8) performing discrete tasks captured in said frame. During AI model 110 training, the live video stream is captured through plurality of synchronized video cum audio capture device. The video is decoded to obtain plurality of frames. The extracted frames are taken for calibration to remove distortions. Simultaneously, an audio is extracted from a captured video for identification of any sound event associated with the task. The decoded frames are stored in a storage medium. The frames comprise of data in the form of an audio, a video, or an image. The audio, video and image data representing at least one task captured in decoded frames are annotated to obtain labelled dataset. This labelled dataset is then fed to an AI processor comprising modules (M1, M2, .... M8) capable of identifying at least one task. The AI model is allowed to be trained based on input data to identify at least one micro-activity in an image, an audio, or video data. The trained AI model 110 is further utilized to perform task sequencing and micro-activity recognition. Therefore the pre-trained AI model 110 through the plurality of modules (M1, M2,.... M8) identifies discrete tasks captured in the frame wherein each of the module is contributing to specific object detection as well as human action recognition. Few modules are trained to recognize human actions such as video classification module, Audio analysis (AA) module, Hand gesture (HG) module, pose estimation module and occupied hand module; and few modules are trained to identify objects and activity such as Object-hand-association (OHA), Optical character recognition (OCR) and Dimension measurement (DM). At least one micro-activity is determined by combining an output of said modules and the extracted audio. The micro-activity was detected as a result of processing the audio and video input in the pre-trained AI model 110 and is guided by a configuration activity map tool to detect at least one micro-activity. The configuration map tool coordinates between the modules of the AI model 110 detecting the micro-activity. The output of each module is mapped to the exact time duration of the micro-activity performed. The micro-activity configuration map tool comprises of all the pre-defined features, actions, and parameters to be utilized by the modules for training the AI model. The micro-activity configuration map tool is customizable at user end. User can define its own set of actions which are specific for training the modules to train for making specific prediction. The video classification module classifies the micro-activity into N classes, where N is the number of micro-activity required to recognize. To verify the micro-activity is correct we use other modules like hand gesture recognition, pose estimation and occupied hand detection. The confirmed activity will be used to check the sequencing of the micro-activity. ODA module is used to detect the right tool usage during the activity. HG recognition is used to detect the right tool handling while performing the activity.

Each of the micro-activity is a function of the modules (SM) as mentioned above, wherein said micro-activity ($\mu A_i$) is defined as:

$$\mu A_i = \sum_{j=1}^{8} \delta_{i,j} SM_j$$

where, $\delta_{i,j}$ = 0 *or* 1 based on the following configuration table-1 representing sample activity map for 4 micro-activities. Numeric 1 indicates the specific micro-activity is happening and to be analyzed using specific module; whereas numeric 0 indicates no contribution of the specific model as activity representative of said model is not happening. Based on micro-activity, specific module gets activated and the combination $\mu A_i$ represents decision on micro-activity class based on combination of module inference.

Table-1

|  | $SM_1$ = ODA | $SM_2$ = AR | $SM_3$ = AA | $SM_4$ = HG | $SM_5$ = BP | $SM_6$ = OCR | $SM_7$ = DM | $SM_8$ = OD |
|---|---|---|---|---|---|---|---|---|
| $\delta_{1,j}$ | 1 | 1 | 0 | 1 | 1 | 0 | 0 | 1 |
| $\delta_{2,j}$ | 1 | 1 | 0 | 1 | 0 | 1 | 0 | 1 |
| $\delta_{3,j}$ | 0 | 1 | 1 | 1 | 1 | 0 | 1 | 1 |
| $\delta_{4,j}$ | 1 | 1 | 0 | 1 | 0 | 1 | 0 | 1 |

A switch is provided with an on-off mechanism, which is triggered by a micro-activity configuration map and allows specific modules to be activated based on inputs received from camera/image capture device.
A wrapper function is provided that determines the micro-activity detected as a result of actioning of one or more modules upon receiving input from camera/ image capture device and instructions from micro-activity configuration map tool. The wrapper function performs feature selection by selecting the most significant and relevant micro-activity from vast set of given datasets. The wrapper function is selected from any known wrapper methods such as forward selection, backward elimination, and bi-directional elimination. The modules performing micro-activity detection bypass the specific activity training in all cases. This helps the solution to get adapted to new activity, doesn't have dependency on large volume of video etc.

At step 308 of the method 300, the one or more hardware processors 104 are configured to verify the micro-activity based on plurality of pre-defined conditions. The pre-defined conditions provide a checkpoint to identify particular micro-activity based on parameters defined by the user in the system.

At step 310 of the method 300, the one or more hardware processors 104 are configured to assign a weightage to each micro-activity recognized and compute the cumulative performance score of the human performing the task. The method provides an option to customize the assignment of weightage at the user end. The cumulative quality score is calculated for an activity detected through the AI model 110 and subsequently confirmed/verified. The one or more micro-activities detected and confirmed according to the process of the present invention are rated for quality score meant to give a sense of how well an activity is performed by a human. The method of human activity recognition applications in ubiquitous computing scenarios requires focus on assessing the quality of activities, which goes beyond mere identification of activities of interest. Objective quality assessments are often difficult to achieve, hard to quantify, and typically require domain specific background information that bias the overall judgement and limit generalization. A framework for skill assessment in activity recognition enables automatic quality analysis of human activities. Based on critical features involved while performing an activity, verification tool confirms sequence verification, tool verification and presence/absence of micro-activity and such confirmation by verification tool further involves assigning a weightage to each micro-activity. The weightage assigned to each micro-activity is based on a right tool usage and a right tool handling while performing the micro-activity. The assignment of weightage is configurable at user end. Based on criticality identified by the user, weightage can be configured, and accordingly quality score can be generated. A cumulative quality score is calculated for an activity detected through AI model 110 and subsequently confirmed/verified by a verification tool. Penalty is deducted whenever the wrong tool usage is detected, or wrong tool handling is detected, or the wrong activity sequencing is detected. The overall quality score is suffered by penalty assignment.

The steps of the method for micro-activity scoring, as described below:

a). receive a live video stream through plurality of synchronized video cum audio capture device capable of acquiring respective image views together covering a field of view focusing the micro-activity associated with a task performed by a human or by a machine being pre-trained;
b). decode video stream received from the video cum audio capture device to obtain plurality of frames. Further calibrate the frames for removing distortions. Simultaneously an audio is extracted from the video stream and processed to identify a sound event associated with the task;
c). extracted frames are input for processing in a pre-trained AI model for micro-activity recognition wherein said AI model comprises of a series of sub-modules performing discrete tasks captured in said frame;
d). the output of said sub-modules and the extracted audio determines the micro-activity identified;
e). micro-activity detected is confirmed based on plurality of pre-defined conditions;
f). weightage is assigned for each micro-activity recognized and cumulative performance score of the human performing the task is derived; and
g). cumulative performance score is stored in a computer readable format.

At step 312 of the method 300, the one or more hardware processors 104 are configured to store the performance score in the form of a scorecard in a computer readable format. The scorecard effectively captures complete details of an operator (e.g., a human performing a task/activity), activity class, details of multiple micro-activities involved within an activity. The scorecard further provides detailing of micro-activity whether done correctly or not; what kind of anomaly identified while performing an activity. The scorecard also captures the time within a video duration at which a micro-activity (whether done correctly or not) is detected. The score card generated as a result of AI activity training provides a real time feedback with prompt and appraisal. At step 314 of the method 300, the one or more hardware processors 104 are configured to store the scorecard generated for the task. The scorecard is generated and stored in a computer readable format. The scorecard effectively captures complete details of an operator (e.g., a human performing a task/activity), activity class, details of multiple micro-activities involved within an activity. Therefore, the AL model through the plurality of modules effectively detects the micro-activity. The method also encompasses video processing algorithms like (a) zone mapping of tools, (b) track and tag unit ID (like screw id), (c) angle measurement between fingers to ensure safe gesture while holding tools etc. along with AI models to make the method robust while identifying the plurality of micro-activity associated with the task under surveillance. The steps of scorecard generation are stated below:

a). receive a live video stream through plurality of synchronized video cum audio capture device capable of acquiring respective image views together covering a field of view focusing the micro-activity associated with a task performed by a human;
b). decode video stream received from the video cum audio capture device to obtain plurality of frames. Further calibrate the frames for removing distortions. Simultaneously an audio is extracted from the video stream and processed to identify a sound event associated with the task;

c). extracted frames are input for processing in a pre-trained AI model for micro-activity recognition wherein said AI model comprises of a series of sub-modules performing discrete tasks captured in said frame;

d). the output of said sub-modules and the extracted audio determines the micro-activity identified;

e). micro-activity detected is confirmed based on plurality of pre-defined conditions;

f). weightage is assigned for each micro-activity recognized and cumulative performance score of the human performing the task is derived; and

g). The cumulative performance score is stored in a computer readable format.

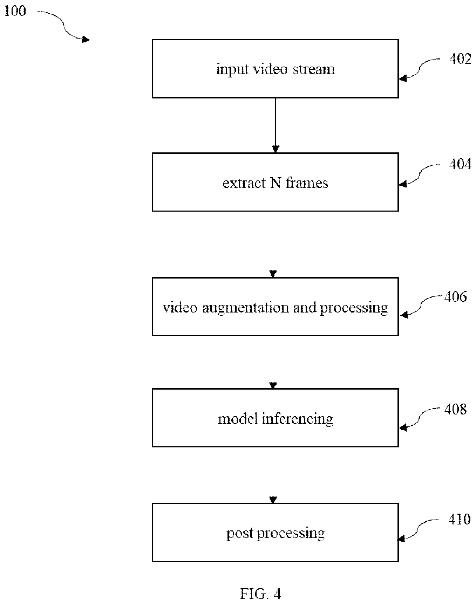

FIG. 4 illustrates steps of activity identification from a video classification module (M2), in accordance with some embodiments of the present disclosure.

As is illustrated, at the step 402, the video classification module 110B receives the video stream of the person performing the task under surveillance. At 404, the batch of frames are extracted from the video stream. The batches of frame extraction led to extraction of both spatial information as well as temporal information. The batch of frames is used for video inferencing. The number of frames in a batch is configurable and can be adjusted according to the types of micro-activity to be monitored. At 406, the extracted batch of frames are taken for pre-processing. In the pre-processing, transformations are applied to the batch of frame to make data suitable for inferencing. The pre-processing results in the processed batch of frames. At 408, the video inferencing is performed on the processed batch of frames. The video inferencing involves identifying plurality of micro-activity involved in the task. At 410, post-processing is applied on the individual inferences obtained by the plurality of modules. The plurality of modules predicts at least one micro-activity associated with the task. Further, post-processing involves preparing the output of the video classification module 110B by identifying plurality of micro-activities associated within the task captured in the plurality of batch of frames.

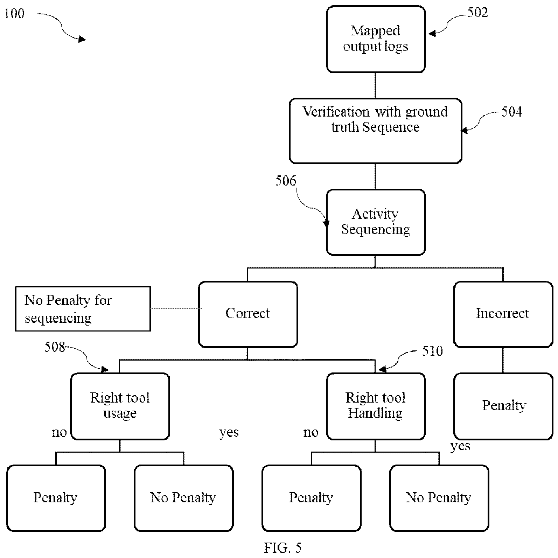

FIG. 5 illustrates generalized scheme for scoring the plurality of micro activities associated within a task under surveillance, in accordance with some embodiments of the present disclosure. The system 100 is configured to assign an individual score to each modules associated with the micro-activity recognition. As the proposed method utilizes the plurality of modules for micro-activity recognition, the output of all the modules needs to be mapped at exact duration with the right activity. The log is generated for each of the micro-activity recognized by the respective modules with respect to time. Therefore, the log so generated has the mapped information about all the modules. At the step 502, the scoring starts by obtaining the mapped output logs of the plurality of micro-activity captured by the individual module (M1, M2.... M8). At the step 504, to check the correct sequence of the plurality of micro-activity, the predicted activities of the video classification module are compared with the ground truth list. At step 506, the system 100 runs a conditional check. If the predicted outcome of video classification module 110B match with the ground truth list, system 100 does not levy any penalty and further activity will be checked for the right tool usage and right tool handling. However, at the same step 506, if the predicted outcome of video classification module 110B does not match with the ground truth list, the system 100 levy a penalty and certain pre-defined score is deducted. The pre-defined score can be customized at the user end based on sensitivity and importance of the micro-activity. Further, at step 508, the system 100 levy a penalty for not using the right tool usage. Accordingly, score is deducted upon each wrong use of the tool. However, for each use of the right tool, positive score is generated. Further, at step 510, the system 100 levy a penalty for not having the right tool handling. Accordingly, score is deducted upon each wrong handling of the tool. However, for each correct handling of the tool, positive score is generated. Finally, the system 100 generates the overall score by adding all the individual scores for right tool usage and right tool handling; and by deducting all the penalties levied for of the plurality of modules and deducting wrong tool usage and wrong tool handling.

USE CASE-I:

MICRO-ACTIVITY IDENTIFICATION OF THE PACKAGING OPERATION AT THE PACKAGING INDUSTRY

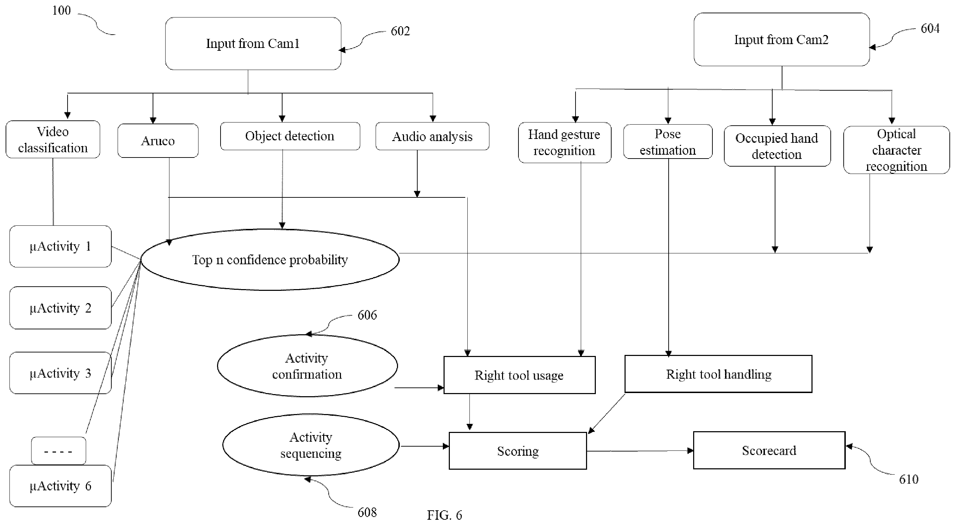

Referring to FIG. 6, a system and a method of micro-activity recognition pertaining to execution of an appropriate packaging operation at the packaging industry setup is presented. An example scenario depicting the method of micro-activity recognition performed by the disclosed system 100 for packaging operation at the packaging industry setup is described below. Recognition of packaging tasks using standard supervised machine learning is difficult because the observed data vary considerably depending on the number of items to pack, the size of the items, and other parameters. In this study, the focus is on characteristic and necessary actions (motions) that occur in a specific operation such as an action of stretching packing tape when assembling shipping boxes, an action of holding a tape, sequence of activity for packing specific item etc. The micro activities carried by a human operator while executing the packaging task and ensuring that the steps of the packaging are appropriately done.

Hardware setup: Two cameras (cam 1 and cam2) to record the actions are used. Both cameras were equipped with microphones to record the audio signal that can be used to confirm some activity steps. The recording speed for capturing images was 30FPS. The focus of the cameras was manually adjusted.

The critical steps identified and required to be followed by the operator:

1. Organizing the packaging space (μActivity 1)
2. Measuring the product to be packed (μActivity 2)
3. Selecting the right box for the product. (μActivity 3)
4. Protection by packing in bubble wrap, air bag etc. (μActivity 4)
5 Sealing the box. (μActivity 5)
6. Labelling the address (μActivity 6)

Identification of micro-activity is required to train AI models. More detailing of micro-activities associated within a task/activity and their classification provides better selection of sub-modules making predictions. Based on each activity listed above feature extraction is performed at the step 604 by identifying micro-activity involved while executing packaging operation, the sequence of activities, right tool usage and right handling of the tool as listed in table-2 below.

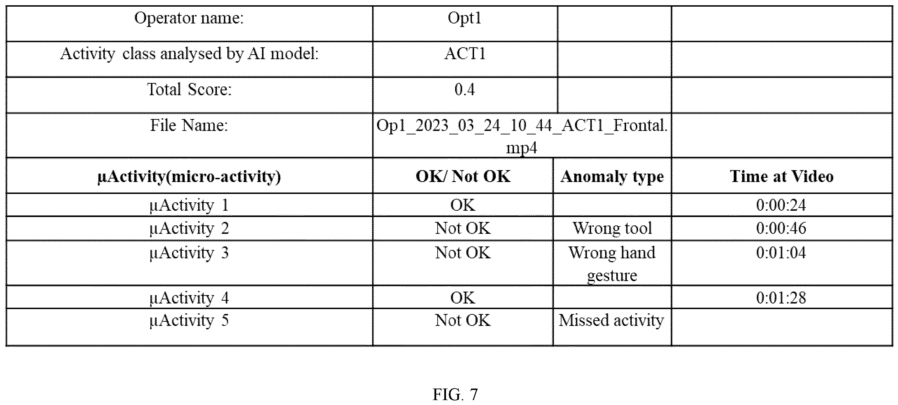

As depicted in FIG. 6, the system 100 includes two cameras (cam 1 and cam 2) to capture the activity. Both the cameras are synchronized to capture the live video stream. At the step 602, input received from the first camera (Cam1) undergoes frame extraction and calibration and sent to three sub-modules of an AI model. The extracted frame from the first camera is processed at video classification module, object-hand-association module (OHA) and audio analysis module followed by ArUco™ marking. From the several activities being done and being recorded at a time, the activities with at least two confidence probability are captured as micro-activity to be identified. Further, the identified activities from an AI model are sent for activity verification where the activity verification tool applies several checkpoints to confirm the happening of an activity that includes sequence verification too. The AI model offered automatic activation of sub-modules based on activity identified, e.g., to detect right tool usage, obj ect-hand-association module (OHA) and audio analysis module got activated along with ArUco™ marking. Similarly, at the step 604, input received from the second camera (Cam2) undergoes frame extraction and calibration and sends to another three sub-modules of an AI model. The extracted frame from the second camera were processed at hand gesture recognition module, pose estimation and occupied hand detection. The AI model offered automatic activation of these three sub-modules based on activity identified. e.g., to detect the right tool handling. object-hand-association module (OHA) and occupied hand detection module utilized detecting the right tool usage during the activity like detection of pen, correct wrap, right address marking, sealing, labeling etc. known dimension ArUco™ code are placed to measure the product size and box size. Further, hand gesture and pose estimation modules are utilized to detect the right tool handling to check the hand movements while wrapping, number of times the wrapping is done, double checking the address etc. Finally, an optical character recognition module is configured to check the placement of address. At the step 606, for each activity listed above, the activity confirmation check is carried out to check whether right tool is being used and the tool is handled appropriately. Similarly, at the step 608, the confirmed activity undergoes one more check for sequence verification and further scores are provided for activity sequencing. At step 610, identified activities captured from two different cameras and processed at selective sub-modules and taken for cumulative quality score calculation and a scorecard is generated to provide real time feedback. Based on prediction made by pre-trained AI model, micro-activities involved in packaging are identified and confirmed and finally, a scorecard is generated by capturing details of operator executing the task as well as presence/absence of micro-activity along with a quality score and stored in the computer in CSV or tabular format. The scorecard generated is shown in FIG. 7.

Quality scoring matrix: The cumulative quality score is generated by a quality scoring matrix for an activity detected through pre-trained AI model comprising of various modules. The quality score thus generated is captured in a scorecard and is stored in a computer readable format. Quality scoring matrix offers configuration flexibility at the user end. Activity weightage may be defined by the user based on the criticality involved. An exemplary quality scoring matrix is presented below:

1. Presence and absence of subtask. Weightage 30% (configurable)

$$\text{Score value}[1] = (\text{Number of steps done incorrectly})/\text{Total Number of steps}$$

(e.g., if there are 12 steps and all the stpes are present the score value[1] would be 12/12=1. But if two activities are missed then the score velue[1] would be 10/12)

2. Sequence of subtask. Weightage 25% (configurable) Score value[2] = (Number of sequence done incorrectly) / Tota Number of sequence

3. Right tool usage. Weightage 25% (configurable)

$$\text{Score value}[3] = (\text{Number of tools used incorrectly})/\text{Total Number of tools}$$

4. Tool Handling. Weightage 20% (configurable)

$$\text{Score value}[4] = \text{click sound heard 1 otherwise 0}$$

*Final Scoring: Sum of (Score value[i]* Weightage)/Sum of all weights*

In the scoring matrix, the total score is ranged between 0 to 1 if no activity is performed correctly, it is 0 and if all are done properly it is 1. The weightage given to each module is configurable. The sum of weightage of all the module should sum to 100. In this use case, weightages are considered as follows:
◦ Video Classification: 40
◦ Right tool usage:30
◦ Right tool Handling:30
◦ Total number of activities =6
◦ Total number of tools used=11
◦ Total number of activities where right tool handling is checked= 4
◦ The below scenario presents the scores generated if user forgets to organize the packaging space and did not place the ruler correctly for measurement.

Table-2

| Chronology | Video Classification | Right tool usage | Right handling of the tool |
|---|---|---|---|
| 1. | Organizing the packaging space | | |
| 2. | Measuring the product to be packed | Ruler | Placement of ruler to measure the product precisely |
| 3. | Selecting the right box for the product | Ruler | Placement of ruler to measure the box precisely |
| 4. | Protection by packing in bubble wrap, air bag etc. | Bubble wrap, foam packing, plastic inflated air bags | |
| 5. | Sealing the box. | Scissor, right adhesive tape | Wrapping tape in correct direction. Tape should be wrapped 4-5 times |
| 6. | Labelling the address | Label, pen | Label should be at top of the box, Double check the address is correct |
| | Score:(Number of wrong activities/ Total number of activities) *weightage | Score:(Number of wrong tools used/Total number of tools)* weightage | Score:(Number of wrong usage of tools/Total number of tool handling cases)* weightage |
| Score | (5/6)*40= 33.33 | (11/11)*30= 30 | (3/4)*30= 22.5 |
| Total Score: (33.33+30+22.5)/100=0.853 | | | |

Therefore, the score for packaging task carried by the operator under surveillance based on right tool usage and right tool handling comes to 0.853. The score card gives a detailed analysis of the task performed.

USE CASE-II

VERIFICATION OF ACTIVITY SEQUENCING IN LAPTOP ASSEMBLY WITH RIGHT TOOL USAGE AND RIGHT TOOL HANDLING

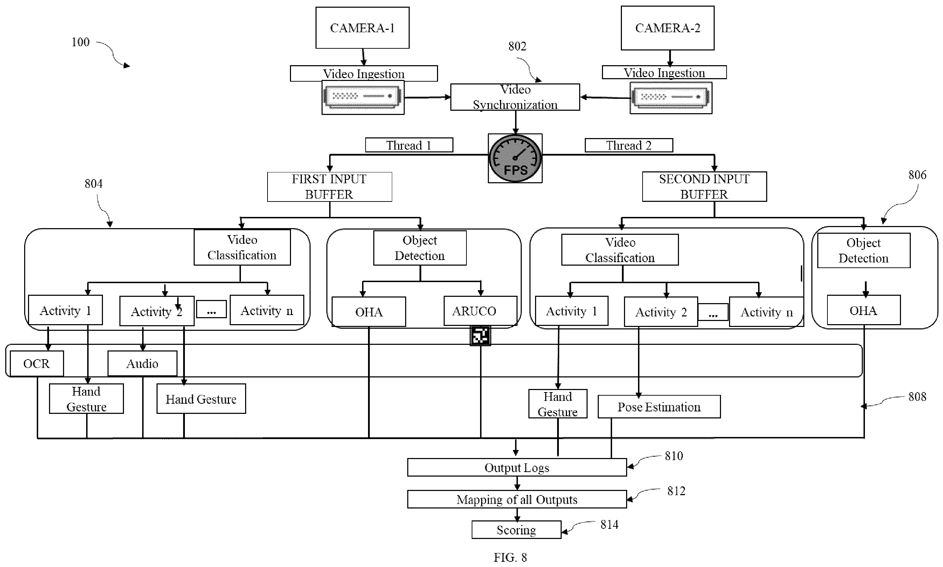

An example scenario depicting the method of micro-activity recognition performed by the disclosed system 100 for assembling of the laptop is described with reference to the FIG.8. For micro-activity identification during laptop assembly operation, the previously trained AI model 110 is integrated to receive the video stream input of the laptop assembly. The AI model is trained to identify the micro-activities associated with the laptop assembly operation. The sequence of activities, right tool usage and right handling of the tool as listed in table-3.

The operator performing laptop assembly task is set under surveillance by capturing the live video stream through a set of camera placed to capture the activity. At the step 802, the video stream captured through the camera-1 and camera-2 is processed at the video indigestion device and synchronized to obtain a plurality of frame of scene. Videos from all the cameras are ingested. Synchronization of all the videos is performed to maintain same FPS (Frames per second), as number of frames and their time of occurrence will vary in case of varying FPS. This will lead to incorrect output, as the activity performed will not overlap with the right tool usage and right tool handling. There are input buffers associated with all the cameras. All the buffers are of Input FPS size and are multi-threaded. At the step 804, one thread (thread 1) of the synchronized video is processed as a first input buffer and fed to the object-hand-association module (OHA) 110A and the video classification module 110B. The 110A and 110B together focus on right tool usage and estimates correct usage of tools based on input thread of the synchronized video. Similarly, at step 806, another thread (thread 2) of the synchronized video is processed as a second input buffer and fed to the object-hand-association module (OHA) 110A and the video classification module (110B). The 110A and 110B together focus on the right tool usage and estimates correct usage of tools based on input thread of the synchronized video. This kind of approach of multi-camera identification of micro-activity offers close surveillance and precise recognition through an AI model 110. The video classification module 110B is utilized to classify spatio-temporal data. The model is trained using an efficient 3D network. A sliding window approach is used to prepare the data to do training. In this approach the input video is divided into one to few seconds according to the activity class. Further, video transformation like flipping, rotation, Jitter are applied to include different examples in the training data set. The model is trained for 12 activity classes and the video is inferred every second with a 30 second overlap. At the step 808, Hand Gesture Module 110D and Pose Estimation 110E are utilized to verify the gesture performed during the activity. For this use case the gestures used are screw tightening, screw loosening, holding position of screwdriver, holding position of laptop back cover. The hand key points are detected using media pipe for both hands. The video stream captured from the first and the second cameras are used for activity classification. The training data is prepared by extracting frames for specific hand gesture from the video. Hand key points are extracted for each gesture from multiple videos that are used for training. Customized deep learning model is used for classification of key points. Similarly, two different approaches are used to calculate the object hand association from both cameras. Interaction of hand and object is identified using Interaction over union (IOU). IOU is calculated between the bounding box of the object detected by object-hand-association module (OHA). As the hand is moving over multiple object during the activity, false positives are also captured. This is further confirmed using second camera by occupied hand model 110H, this verifies whether hand is holding the object or not. The micro-activity mapped by 110D and 110H modules are presented in Table-4. The object-hand-association module 110A detects the items using object-hand-association module (OHA). The objects detected for laptop assembly operation are screw, screwdriver, back cover, air blower, hard disk, table and RAM. Yolov4(Single stage object detector) is used for object detection. The score is generated based on ground truth actions and actual action happened while performing the micro-activity. Finally, zone wise verification is performed from different sides of the object. The field of view from top camera is divided into right and left zone with respect to the laptop. Using object-hand-association module (OHA) all the objects are identified. Right and left zones are created with respect to the laptop. The area of zones is assigned using the bounding box coordinate of closest and farthest object from each side. To check the object is picked from which side of the table we check the object is missing from which side of the zone during the activity. To identify this IOU between the zone and object is calculated. Video classification module and object-hand-association module (OHA) are inferenced parallelly. Based on the output of video classification module, other modules like OCR (110F), audio (110C) and hand gesture (110D) are triggered. Here activity sequencing is verified by the video classification module. OHA (110H), OCR (110F), Audio analysis (110C) and ArUco™ are used in the verification of right tool usage and Hand gesture (110D) and pose estimation (110E) is used for right tool handling. As different modules are using different camera angles based on the perspective, the output of all the module is mapped at an exact duration to verify that the activity is performed in the right sequence as well as with right tool usage and right tool handling. The individual scores of all the active modules utilized in the laptop assembly operation are presented in the table-4.

Table-3

| Activity Sequencing | Right tool usage | Right tool handling |
|---|---|---|
| Selection of right screwdriver | Screwdriver | Right screwdriver by length |
| Opening of all screws | Screws, Screwdriver | Screwdriver should be held upright |
| Removing back cover | Back cover | |
| Dust cleaning using air blower | Air blower | |
| Loosening of screws to remove hard disk | Screwdriver screws | Screwdriver should be held upright |
| Remove hard disk and keep on left side of table | Hard disk, Table | Verification of right & left side of table |
| Remove RAM and keep on left side of table | RAM, Table | Verification of right & left side of table |
| Pick up new hard disk from right side of the table and place it in hard disk slot | Hard disk | Verification of right & left side of table |
| Tightening of the hard disk screw | Screw, Hard disk | |
| Pick up new RAM from right side of the table and place it in RAM slot | RAM, Table | Verification of right & left side of table |
| Put back the cover | Back Cover | |
| Closing the screws | Screws, Screwdriver | Screwdriver should be held upright |

Table-4

| Video classification module | Hand gesture(Yes/No) | Object Hand Association | Pose Estimation (Yes/No) | Audio analysis |
|---|---|---|---|---|
| No activity | ArUco™ : To measure right | | Yes | |

(continued)

| Video classification module | Hand gesture(Yes/No) | Object Hand Association | Pose Estimation (Yes/No) | Audio analysis |
|---|---|---|---|---|
| | screwdriver length | | | |
| Selection of right screwdriver | Loosening :Yes | Right Screwdriver Interaction: No | Yes | |
| Opening of all screws | | Right Screw Interaction: Yes | Yes | |
| Removing back cover | Screw Loosening :Yes | Back cover Interaction : Yes | Yes | |
| Dust cleaning using air blower | | Air blower interaction: Yes | Yes | |
| Loosening of screws to remove hard disk | Tightening : Yes | Screw interaction: Yes/ | Yes | |
| Remove hard disk and keep on left side of table | | Hard Disk Interaction from correct zone: No | Yes | Not present |
| Remove RAM and keep on left side of table | | RAM-Interaction: Yes | Yes | |
| Pick up new hard disk from right side of the table and place it in hard disk slot | | Hard Disk Interaction from correct zone: Yes | Yes | |
| Tightening of the hard disk screw | | Screw Interaction: Yes | Yes | |
| Pick up new RAM from right side of | | RAM Interaction | Yes | |
| the table and place it in RAM slot | | from correct zone: Yes | | |
| Put back the cover | | Back cover Interaction: Yes | | |
| Closing the screws | | Right Screwdriver-Interaction: Yes | | |
| Score: (Number of activity missing/Total number of activities)* Weightage | Score: (Number of gesture missing/Total number of Gestures)* Weightage | Score: (Number of association missing/Total number of activities)* Weightage | Score: (Number of wrong pose /Total number of Pose estimated)* Weightage | Score: (Present(1)/ NotPresent (0))* Weightage |
| Score: (13/13)*30 =30 | Score: (4/4)*20= 20 | Score: (8/10)*20 =16 | Score: (11/11) *20=20 | Score:0* weightage=0 |
| Total score: (30+20+16+20+0)/100 =0.86 | | | | |

Scoring of laptop assembly operation: Total score ranged between 0 to 1. If no activity is performed correctly, it is 0 if all are done properly it is 1. The weightage given to each module is configurable. The sum of weightage of all the module should sum to 100. In this use case, the weightage is assigned as:

EP 4 465 253 A1

- Video Classification: 30

- Hand gesture: 20

- Hand object association: 20

- Pose estimation: 20

- Audio : 10

Based on individual scoring of video classification module, hand gesture module, occupied hand module, pose estimation module and Audio analysis module, the total score of an activity based on the system 100 is assigned as 0.86.

The micro-activity identification as proposed by the system 100 is suitable for complex real-world scenario where multiple micro-activities happens simultaneously, such as human surveillance involved in performing an activity/task, surveilling a robot, cobot, humanoids or the like involved in performing an activity/task.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of micro-activity identification, its effective capture as well as quality scoring that provides a real time feedback of an event. The embodiment thus provides an agile solution wherein AI model offers an effective way of processing the input based on various types of micro-activities. The fiducial marking coupled with specific module that detects the dimensions of an object being involved in micro-activity provides accurate predictions about tool selection and handling. The scoring function assigned to each micro-activity detected and an option of configurable scoring matrix provides significantly reliable system wherein real time feedback of an operator can be obtained along with quality score.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.    A processor implemented method (300) of scoring a task involving a plurality of micro-activity, the method comprising:

receiving (302), via one or more hardware processors, a video stream through a plurality of synchronized video cum audio camera device;
decoding (304), via the one or more hardware processors, the video stream by an ingestion device, wherein the ingestion device decodes the video stream into a plurality of frames and extracts the associated audio from the video stream;
detecting (308), via the one or more hardware processors, at least one micro-activity in the plurality of frames by a pre-trained AI model;
verifying (310), via the one or more hardware processors, the micro-activity detected by the pre-trained AI model, wherein verification involves matching the micro-activity detected with a ground truth sequence previously fed to the AI model;
assigning (312), via the one or more hardware processors, a weightage to the each of the micro-activity detected by the plurality of modules and scoring the task by adding a positive score to each micro-activity performed correctly and assigning a penalty to the micro-activity performed incorrectly; and
obtaining (314), via the one or more hardware processors, a quality score for the task based on individual score assigned to the plurality of micro-activities detected.

2.    The method as claimed in claim 1, wherein the AI model comprises of an object-hand-association module, a video classification module, an audio analysis module, a hand gesture module, a pose estimation module, an optical character recognition module, a dimension measurement module and an occupied hand module.

3.    The method as claimed in claim 1, wherein the weightage assigned to each micro-activity is based on a right tool usage and a right tool handling while performing the micro-activity.

4.    The method as claimed in claim 1, wherein the output of each module is mapped to the exact time duration of the micro-activity performed.

5.    A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a video stream through a plurality of synchronized video cum audio camera device;
decode the video stream by an ingestion device, wherein the ingestion device decodes the video stream into a plurality of frames and extracts the associated audio from the video stream;
detect at least one micro-activity in the plurality of frames by a pre-trained AI model;
verify the micro-activity detected by the pre-trained AI model, wherein verification involves matching the micro-activity detected with a ground truth sequence previously fed to the AI model;
assign a weightage to the each of the micro-activity detected by the plurality of modules and scoring the task by adding a positive score to each micro-activity performed correctly and assigning a penalty to the micro-activity performed incorrectly; and
obtain a quality score for the task based on individual score assigned to the plurality of micro-activities detected.

**6.** The system as claimed in claim 5, wherein the AI model comprises of an object-hand-association module, a video classification module, an audio analysis module, a hand gesture module, a pose estimation module, an optical character recognition module, a dimension measurement module and an occupied hand module.

**7.** The system as claimed in claim 5, wherein the weightage assigned to each micro-activity is based on a right tool usage and a right tool handling while performing the micro-activity.

**8.** The system as claimed in claim 5, wherein the output of each module is mapped to the exact time duration of the micro-activity performed.

**9.** One or more non-transitory machine-readable information storage mediums comprising one or more instructions which when executed by one or more hardware processors cause:

receiving a video stream through a plurality of synchronized video cum audio camera device;
decoding the video stream by an ingestion device , wherein the ingestion device decodes the video stream into a plurality of frames and extracts the associated audio from the video stream;
detecting at least one micro-activity in the plurality of frames by a pre-trained AI model;
verifying the micro-activity detected by the pre-trained AI model, wherein verification involves matching the micro-activity detected with a ground truth sequence previously fed to the AI model;
assigning a weightage to the each of the micro-activity detected by the plurality of modules and scoring the task by adding a positive score to each micro-activity performed correctly and assigning a penalty to the micro-activity performed incorrectly; and
obtaining a quality score for the task based on individual score assigned to the plurality of micro-activities detected.

**10.** The one or more non-transitory machine-readable information storage mediums as claimed in claim 9, wherein the AI model comprises of an object-hand-association module, a video classification module, an audio analysis module, a hand gesture module, a pose estimation module, an optical character recognition module, a dimension measurement module and an occupied hand module.

**11.** The one or more non-transitory machine-readable information storage mediums as claimed in claim 9, wherein the weightage assigned to each micro-activity is based on a right tool usage and a right tool handling while performing the micro-activity.

**12.** The one or more non-transitory machine-readable information storage mediums as claimed in claim 9, the output of each module is mapped to the exact time duration of the micro-activity performed.

System 100     Memory 102

ML model 110

Object detection and association module (M1) 110A

Video classification module (M2) 110B

Audio analysis module (M3 ) 110C

Processor 104

Hand gesture (M4) 110D

Pose estimation (M5) 110E

Optical character recognition module (M6) 110F

I/O Interface 106

Dimension measurement module (M7) 110G

Occupied hand module (M8) 110H

Video & Audio input 108

Database 112

FIG. 1

FIG. 2

Method
300

receive a video stream from plurality of video cum audio capture devices — 302

↓

decode video data to obtain frames and extracting audio — 304

↓

Frame processing in machine learning model — 306

↓

Detect at least one micro-activity — 308

↓

Verify at least one micro-activity detected — 310

↓

Assign weightage to each micro-activity, assign penalty for wrong performance and calculate the score — 312

↓

Obtain quality score and store the scorecard — 314

FIG. 3

100

input video stream — 402

↓

extract N frames — 404

↓

video augmentation and processing — 406

↓

model inferencing — 408

↓

post processing — 410

FIG. 4

100

Mapped
output logs — 502

Verification with ground
truth Sequence — 504

506
Activity
Sequencing

No Penalty for
sequencing

Correct

Incorrect

508
Right tool
usage

510
Right tool
Handling

Penalty

no          yes          no          yes

Penalty     No Penalty     Penalty     No Penalty

FIG. 5

100

Input from Cam1 — 602

Input from Cam2 — 604

Video classification

Aruco

Object detection

Audio analysis

Hand gesture recognition

Pose estimation

Occupied hand detection

Optical character recognition

µActivity 1

µActivity 2

µActivity 3

- - - -

µActivity 6

Top n confidence probability

Activity confirmation — 606

Activity sequencing

608

Right tool usage

Right tool handling

Scoring

Scorecard

610

FIG. 6

| Operator name: | Opt1 | | |
|---|---|---|---|
| Activity class analysed by AI model: | ACT1 | | |
| Total Score: | 0.4 | | |
| File Name: | Op1_2023_03_24_10_44_ACT1_Frontal.mp4 | | |
| **µActivity(micro-activity)** | **OK/ Not OK** | **Anomaly type** | **Time at Video** |
| µActivity 1 | OK | | 0:00:24 |
| µActivity 2 | Not OK | Wrong tool | 0:00:46 |
| µActivity 3 | Not OK | Wrong hand gesture | 0:01:04 |
| µActivity 4 | OK | | 0:01:28 |
| µActivity 5 | Not OK | Missed activity | |

FIG. 7

100

CAMERA-1

Video Ingestion

802

CAMERA-2

Video Ingestion

Video
Synchronization

Thread 1

FPS

Thread 2

804

FIRST INPUT
BUFFER

SECOND INPUT
BUFFER

806

Video
Classification

Object
Detection

Video
Classification

Object
Detection

Activity 1 | Activity 2 | ... | Activity n

OHA | ARUCO

Activity 1 | Activity 2 | ... | Activity n

OHA

OCR | Audio

Hand
Gesture

Hand Gesture

Hand
Gesture

Pose Estimation

808

Output Logs — 810

Mapping of all Outputs — 812

Scoring — 814

FIG. 8

Europäisches
Patentamt

European
Patent Office

Office européen
des brevets

# EUROPEAN SEARCH REPORT

Application Number

EP 24 17 5091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 222 192 A (GUANGZHOU RESEARCH INSTITUTE OF XIDIAN UNIV) 21 October 2022 (2022-10-21) * page 3 - page 7 * ----- | 1-12 | INV. G06V20/52 G06V40/20 |
| A | US 2015/294483 A1 (WELLS JAMES W [US] ET AL) 15 October 2015 (2015-10-15) * paragraph [0086]; claim 1 * ----- | 1-12 | |

TECHNICAL FIELDS
SEARCHED      (IPC)

G06V

The present search report has been drawn up for all claims

| Place of search | Date of completion of the search | Examiner |
|---|---|---|
| The Hague | 30 September 2024 | Nowbakht Irani, Ali |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 17 5091

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | | Publication date |
|---|---|---|---|---|---|
| CN 115222192 | A | 21-10-2022 | NONE | | |
| US 2015294483 | A1 | 15-10-2015 | DE 102014106211 | A1 | 15-10-2015 |
| | | | US 2015294483 | A1 | 15-10-2015 |

EPO FORM P0459

For more details about this annex : see Official Journal of the European Patent Office, No. 12/82

**EP 4 465 253 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321034111